# EUROPÄISCHE PATENTSCHRIFT

(11) **EP 4 606 278 B1**
(45) Veröffentlichungstag und Bekanntmachung des Hinweises auf die Patenterteilung: **08.04.2026**
(21) Anmeldenummer: 25174563.4
(22) Anmeldetag: 23.01.2024
(51) Int. Cl.: A23C 11/10

(54) **VERFAHREN ZUR HERSTELLUNG EINES MILCHERSATZPRODUKTES**
METHOD FOR PRODUCING A MILK SUBSTITUTE PRODUCT
PROCÉDÉ DE FABRICATION D'UN PRODUIT DE REMPLACEMENT DU LAIT

(30) Priorität: 26.01.2023 DE 102023101947
(43) Veröffentlichungstag der Anmeldung: 27.08.2025
(62) Teilanmeldung aus: 24153444.5
(73) Patentinhaber: OIY Solutions GmbH, 50825 Köln (DE)
(72) Erfinder: Auer, Benjamin, 76646 Bruchsal (DE); Leng, Thomas, 31535 Neustadt (DE); Nesti, Sarah, 50677 Köln (DE); Uhländer, Björn, 49716 Meppen (DE)
(74) Vertreter: IPrime Bonnekamp Sparing Patentanwaltsgesellschaft mbH

(56) Entgegenhaltungen:
- WO-A1-2021/099457
- WO-A1-2022/253474
- WO-A2-02/065855
- US-B2- 7 678 403

## Beschreibung

Die Erfindung betrifft ein Verfahren zur Herstellung eines Milchersatzproduktes, insbesondere von Hafermilch.

Es besteht aufgrund der veganen Lebensweise vieler Menschen das Bedürfnis, entsprechende Alternativen für nicht-vegane Produkte frisch und umweltschonend herzustellen. Neben den Alternativen für Fleischprodukte zählen hierzu auch Alternativen für Milchprodukte, welche im Allgemeinen eine pflanzliche Hauptzutat enthalten, welche als Geschmacks- und Nährstoffgeber in einer Suspension mit Wasser dient. In Hafermilch beispielsweise dient der Hafer als der Geschmacks- und Nährstoffgeber. Um insbesondere den etwas süßlichen Geschmack von Milch zu erhalten, ist die Spaltung der in dem Hafer vorhandenen Stärke in Zucker erforderlich, die in einem mehrschrittigen Verfahren durchgeführt wird. Typischerweise wird Hafermilch in industriellen Anlagen daher in mehreren den jeweiligen einzelnen Verfahrensschritten zugeordneten Stationen produziert, wobei zwar eine große Menge von Hafermilch hergestellt werden kann, jedoch die Herstellung nachteilig auf Vorrat vorgenommen, das fertige Milchersatzprodukt in Verpackungen an die Endverbraucher geliefert wird und darüber hinaus einen relativ hohen Energieverbrauch aufweist. Es besteht daher im Interesse der Frische der Milchersatzprodukte das Bedürfnis, eine dezentrale Herstellung vor Ort mit möglichst geringem Aufwand bereitzustellen, sowie Liefervolumen zu reduzieren, indem nur der proportional geringe Anteil an Rohzutaten in Milchersatzprodukten an den Verbraucher geliefert wird.

DE 20 2012 103 875 U1 zeigt eine Vorrichtung zur Herstellung eines Hafergetränks. Die Vorrichtung umfasst einen heizbaren ersten Behälter und einen zweiten Behälter, wobei zwischen dem ersten Behälter und dem zweiten Behälter ein Puffergefäß angeordnet ist, welches zur Abkühlung der aufgeheizten Hafersuspension aus dem ersten Behälter dient. Über ein an dem zweiten Behälter angeordnetes Boden-Auslassventil wird schließlich das fertige Hafergetränk entnommen. Nachteilig umfasst die Vorrichtung mehrere Behälter, welche kaskadenartig angeordnet sind, sodass ein entsprechend hoher Platzbedarf der Vorrichtung vorliegt und die Vorrichtung sehr aufwendig ausgebildet und entsprechend kostenintensiv in der Wartung und im Betrieb ist.

CN 113 349 320 A zeigt eine Vorrichtung zur Herstellung eines Hafergetränks, wobei räumlich getrennte bzw. über Zuleitungen miteinander verbundene getrennte Verarbeitungsstationen vorgesehen sind. Nachteilig ist auch hier die Vorrichtung wenig bauraumsparend und im Übrigen auch recht komplex ausgebildet.

CN 216 704 118 U zeigt eine Vorrichtung zur Herstellung eines Hafergetränks, umfassend einen Behälter, welcher einen Auslass zur Entnahme des fertigen Hafergetränks aufweist. Auf der Oberseite des Behälters sind zwei Mischbehälter angeordnet, welche jeweils einen Motor an ihrer Oberseite zum Antrieb einer Drehbewegung der in den Mischbehälter hineinragenden, an einer Drehachse angeordneten Rührelemente aufweisen. Die zu vermischenden Zutaten werden über seitlich angeordnete Zugänge zugeführt und nach der Durchmischung über die mit Ventilen absperrbaren Auslässe in dem darunter befindlichen Behälter weitertransportiert. Weiter umfasst die Vorrichtung eine Reinigungsvorrichtung, welche mehrere Reinigungsdüsen umfasst, welche durch einen Wassereinlass mit Wasser versorgt werden. Nachteilig an der gezeigten Vorrichtung ist, dass diese neben dem Behälter mit dem Auslass zur Entnahme des fertigen Hafergetränks einen zusätzlichen Mischbehälter umfasst. Nachteilig ist die Vorrichtung wenig kompakt aufgebaut und ist daher wenig geeignet, frische Hafergetränke in kleineren Räumlichkeiten herzustellen. Darüber hinaus umfasst die Vorrichtung keine Heizmöglichkeit, sodass die für die Herstellung von frischer Hafermilch erforderlichen erhöhten Temperaturen nicht bereitgestellt werden können.

DE 102 45 862 A1 zeigt eine Vorrichtung zum Mischen von pulverförmigen Substanzen in Flüssigkeiten, umfassend einen Behälter mit einem Innenmantel, einer oberen Öffnung und einem unteren konischen Ende, an dem ein Auslass vorgesehen ist. Auf der oberen Öffnung ist ein Deckel angeordnet, wobei am Deckel Zuführungen für eine Wasserspülvorrichtung, eine Unterdruckleitung und eine Pressluftleitung angeordnet sind. An dem Deckel ist weiter eine Gebindeaufnahmevorrichtung vorgesehen, die mit einer Zuführleitung zur Zuführung der pulverförmigen Substanz verbunden ist. In die Gebindeaufnahmevorrichtung kann ein Gebinde eingesetzt werden, welches über eine mit einem Absperrorgan absperrbare Förderleitung mit einen Vorratsbehälter verbunden ist, welches die pulverförmige Subtanz enthält. Zum Öffnen eines Zuführungsventils wird ein Unterdruck in dem Behälter erzeugt, welcher zur Öffnung des Ventils und dem Einsaugen der pulverförmigen Substanz in den Behälter führt. Weiter ist eine Rührvorrichtung zum Rühren vorgesehen, welche einen Motor oberhalb des Deckels und einen in den Behälter eingeführten Rührstab umfasst. Im unteren Bereich des Behälters ist ein Heizmantel angeordnet.

DE 25 05 594 A1 zeigt ein Verfahren zur Herstellung von Nahrungsmitteln aus Pflanzensaaten für Säugetiere und Menschen, wobei einem Brei von zerkleinertem Leguminosen- Material entweder eine Alpha-Amylase allein oder noch zusätzlich Amylglucosidase bei einer ursprünglichen Temperatur von unter 65° C zugesetzt wird und anschließend die Temperatur auf 70 bis 85° angehoben wird, wobei diese Temperatur mindestens 15 Minuten lang aufrechterhalten wird. Weiter werden Hydrolyse-Bedingungen gezeigt, bei denen eine Temperatur von 50 bis 60° und eine Hydrolyse-Dauer von 3 bis 6 Stunden vorgesehen sind. Das Verfahren benötigt zur vollständigen Verzuckerung einen Zeitraum von über 24 Stunden. Um die Amylase zu stabilisieren, wird der pH-Wert für die Verzuckerung auf ein saures Milieu abgesenkt, welches nach der enzymatischen Behandlung mit Hilfe von Lauge erhöht wird. Nachteilig werden bei dem Verfahren Temperaturen über 60° C verwendet, welche einen entsprechenden Energiebedarf für die Herstellung nach sich ziehen oder es werden mehrere Stunden zum Abschluss Verfahrens benötigt, um das Nahrungsmittel herzustellen.

EP 1 502 643 A1 zeigt ein Verfahren zur Herstellung eines Lebensmittels aus einer Flüssigkeit und einem festen Stoff, welche miteinander in einem Behälter mit einem Rührelement vermischt werden, sowie eine Vorrichtung zur Herstellung eines Lebensmittels. Die Vorrichtung umfasst einen Behälter, in welcher die Flüssigkeit und der feste Stoff automatisiert eingefüllt werden können, wobei eine Rührvorrichtung mit einem Rührelement in den Behälter hineinragt. Der Behälter sitzt auf einem Abtropfbelch, wobei oberhalb des Abtropfbleches ein beheizbares Dach angeordnet ist, welcher ein kondensierter von aus dem Behälter aufsteigenden Dampf verhindert. Die Flüssigkeit wird direkt aus einer Wasserleitung oder aus einem Wassertank entnommen, welcher hinter einem Vorratsbehälter für den festen Stoff angeordnet ist, wobei der Wassertank beheizbar ist.

WO 00/22938 A2 zeigt ein Verfahren zur Herstellung von Suspensionen aus Getreide mit Geschmack von natürlichem Getreide und intaktem beta-Glucan. Die Getreidesuspension wird dabei einer enzymatischen Behandlung unterworfen, bei der zumindest eine Hydrolase verwendet wird. Die Hydrolase ist dabei ausgewählt aus der Gruppe, umfassend Beta-Amylase, Alpha-Amylase, Amyloglucosidase und Pullulanase.

WO 02/065855 A2 zeigt ein Verfahren zur Herstellung eines Hafergetränks, wobei für die Herstellung Alpha-Amylase und Beta-Amylase verwendet werden. Als Grundbestandteil werden vorgelatinierte Haferflocken nass gemahlen und zugegeben.

WO 2021/099457 A1 zeigt ein Verfahren zur Herstellung eines Hafergetränks, wobei in dem Verfahren der Einsatz einer thermophile Endo-Alpha-Amylase und eines weiteren Enzyms mit Beta-Glucanase-Aktivität vorgesehen ist, bei dem die thermisch stabilen Enzyme besonders hohen Temperaturen von 70-90°C ausgesetzt werden.

Es ist die Aufgabe der Erfindung ein Verfahren zur Herstellung eines Milchersatzproduktes anzugeben, wobei das Verfahren energiesparend, effizient und zeitsparend ausgebildet ist.

Die vorgenannte Aufgabe wird erfindungsgemäß durch ein Verfahren zur Herstellung eines Milchersatzproduktes gemäß Anspruch 1 gelöst.

Nach einem Aspekt der Erfindung wird ein Verfahren zur Herstellung eines Milchersatzproduktes angegeben, umfassend in einem ersten Verfahrensschritt das Bereitstellen einer trockenen Zutatenmischung, umfassend zumindest eine pflanzliche Hauptzutat, wobei die pflanzliche Hauptzutat als trocken gemahlenes Hafermehl und das herzustellende Milchersatzprodukt als Hafermilch ausgebildet ist, ein erstes Enzym, ein zweites Enzym und einen Co-Faktor zur Hitzestabilisierung eines der Enzyme. Der hitzestabilisierend wirkende Co-Faktor ist als CaCl₂ ausgebildet und das Gewichtsverhältnis des Co-Faktors zu dem einen Enzym, welches durch den Co-Faktor hitzestabilisiert wird, liegt zwischen 1:1 und 2,5:1, bevorzugt zwischen 1,66:1 und 2:1. Weiter liegt das Gewichtsverhältnis des Hafermehls zu Wasser zwischen 1:4 und 1:10, bevorzugt zwischen 1:7 und 1:9. Das erste Enzym ist als hitzestabile Endo-Alpha-Amylase ausgebildet. Weiter liegt die Menge des ersten Enzyms bezogen auf den trockenen Haferanteil zwischen 0,2 und 0,6 Gewichtsprozent, bevorzugt bei 0,4 Gewichtsprozent. Weiter ist das zweite Enzym als hitzeinstabile maltogene Alpha-Amylase ausgebildet. Die Menge des zweiten Enzyms bezogen auf den trockenen Haferanteil liegt dabei zwischen 0,15 und 0,45 Gewichtsprozent, bevorzugt bei 0,3 Gewichtsprozent.

In einem zweiten Verfahrensschritt erfolgt das Bereitstellen von Wasser mit einer maximalen Temperatur von 60 °C, in einem dritten Verfahrensschritt erfolgt das Hinzufügen der trockenen Zutatenmischung in das Wasser unter Rühren zum Erhalt einer Suspension und in einem vierten Verfahrensschritt die Entnahme des fertigen Milchersatzproduktes innerhalb eines Zeitraums von 40 bis 60 Minuten nach dem Hinzufügen der trockenen Zutatenmischung. Vorteilhaft ist das Verfahren zum einen energiesparend ausgebildet, da nur eine relativ geringe Temperatur erforderlich ist und darüber hinaus ist die Dauer des Verfahrens aufgrund des relativ geringen Zeitraumes von 40 bis 60 Minuten bis zur Entnahme des fertigen Milchersatzproduktes kurz. Die kurze Zeit wird durch eine energiesparend-niedrige, aber ausreichend hohe Temperatur für gute Enzymaktivität sichergestellt. Diese Temperatur ist für das hitzeinstabile Enzym alleine noch zu hoch. Das Enzym wird daher durch die Zugabe eines Co-Faktors thermisch stabilisiert. Dadurch kann das Verfahrens bei der gewünschten Temperatur von maximal 60°C durchgeführt werden.

Besonders bevorzugt wird das Verfahren unter Verwendung der nachstehend beschriebenen Vorrichtung durchgeführt, wobei das Wasser in einem Behälter bereitgestellt wird, das Rühren durch eine Rührvorrichtung durchgeführt wird und die Entnahme des fertigen Milchersatzproduktes aus dem Auslass des Behälters erfolgt. Vorzugsweise erfolgt die Zugabe der trockenen Zutatenmischung durch einen an einem Deckel vorgesehenen Einlass.

Die bevorzugte Vorrichtung zur Durchführung des vorstehend beschriebenen erfindungsgemäßen Verfahrens zur Herstellung eines Milchersatzproduktes umfasst einen Behälter mit einem einen Hohlraum definierenden Innenmantel und einer oberen Öffnung zur Aufnahme der zur Herstellung des Milchersatzproduktes erforderlichen Zutaten und einem Auslass zur Entnahme des verzehrfertigen Milchersatzproduktes. Weiter umfasst die Vorrichtung einen Deckel, welcher auf der Öffnung des Behälters angeordnet ist, eine Rührvorrichtung zum Rühren und Dispergieren der in den Behälter aufgenommenen Zutaten, wobei die Rührvorrichtung zumindest ein angetrieben drehbares Rührelement umfasst, welches in dem Hohlraum angeordnet ist. Weiter umfasst die Vorrichtung eine Reinigungsvorrichtung zur automatisierten Reinigung zumindest des Innenmantels des Behälters und eine Heizvorrichtung zur Heizung des Innenmantels des Behälters. Die Vorrichtung zeichnet sich dadurch aus, dass das Verschlusselement über einen Antriebsmotor zwischen einer Schließstellung, in der das Verschlusselement den Einlass verschließt, und einer Öffnungsstellung, in der das Verschlusselement den Einlass öffnet, verstellbar ist. Die Vorrichtung hat den Vorteil, dass zur Herstellung des Milchersatzproduktes lediglich ein einziger Behälter benötigt wird, wobei alle zur Herstellung des Milchersatzproduktes erforderlichen Verfahrensschritte gleichzeitig in dem Behälter vorgenommen werden können. Vorteilhaft lässt sich die Vorrichtung in kleineren Räumlichkeiten, wie beispielsweise in der Küche eines Cafés oder Privaträumlichkeiten zur Herstellung von Milchersatzprodukten nutzen, wobei die Vorrichtung über einen einfachen Haushaltsstromanschluss mit Energie versorgt wird. Weiterhin lässt sich die Vorrichtung auch in Verkaufsstellen wie Einzelhandelsgeschäften nutzen. Besonders bevorzugt umfasst der Deckel einen ersten Einlass, durch welchen hindurch bevorzugt eine trockene Zutatenmischung in den Hohlraum des Behälters zugeführt werden kann. Zweckmäßigerweise umfasst der Deckel weiter einen zweiten Einlass, durch welchen hindurch Wasser in den Hohlraum des Behälters zugeführt werden kann. Weiter bevorzugt umfasst der Deckel einen dritten Einlass, durch welchen hindurch eine niederviskose Flüssigkeit, insbesondere Öl in den Hohlraum des Behälters zugeführt werden kann. Das Zuführen von Öl wird häufig im Zusammenhang mit Milchersatzprodukten als Veredelungsschritt durchgeführt. Die in der Vorrichtung zur Herstellung des Milchersatzproduktes vorhandene Rührvorrichtung wird vorteilhaft dazu verwendet, das Öl unterzumischen und zu verteilen. Vorteilhaft ist es nicht erforderlich, dass der Deckel für die Zuführung der Zutatenmischung und der weiteren Bestandteile wie Wasser und Öl von dem Behälter entfernt werden muss, sondern die Zuführung der Zutaten vorteilhaft automatisiert bei geschlossenem Deckel erfolgt.

In einer bevorzugten Weiterbildung ist vorgesehen, dass der Deckel eine Verschlussvorrichtung mit einem Verschlusselement zum selektiven Öffnen und Schließen des ersten Einlasses umfasst. Weiter bevorzugt ist die Verschlussvorrichtung weiter dazu ausgebildet, den zweiten Einlass und den dritten Einlass sequenziell zu öffnen und zu schließen. Vorteilhaft wird durch die Verschlussvorrichtung sichergestellt, dass die jeweiligen Einlässe jeweils nicht während der Öffnung eines der anderen Einlässe und der Zuführung der jeweiligen Zutat oder während des Herstellungsprozesses durch Spritzen oder aufsteigende Dämpfe verunreinigt werden. Beispielsweise wird hierdurch verhindert, dass die trockene Zutatenmischung während der Zugabe des Wassers nicht mit diesem vorzeitig in Kontakt gerät.

Zweckmäßigerweise weist das Verschlusselement eine erste Durchlassöffnung auf, welche durch Verstellung des Verschlusselementes zwischen der Schließstellung und der Öffnungsstellung gegenüber dem Einlass verlagerbar ist.

In einer zweckmäßigen Weiterbildung der Vorrichtung ist vorgesehen, dass der Deckel ein oberes Deckelteil und ein unteres Deckelteil umfasst, wobei das Verschlusselement zwischen dem oberen Deckelteil und dem unteren Deckelteil beweglich angeordnet ist. Zweckmäßigerweise weist das obere Deckelteil den ersten Einlass auf, wobei das untere Deckelteil eine erste Durchlassöffnung aufweist, welche deckungsgleich unter dem ersten Einlass angeordnet ist. Das obere Deckelteil und das untere Deckelteil sind dabei fest miteinander verbunden. Vorteilhaft wird durch Verlagerung des Verschlusselementes und der in dem Verschlusselement vorhandenen Durchlassöffnung entweder der Durchgang zwischen dem ersten Einlass und der ersten Durchlassöffnung des unteren Deckelteils versperrt oder freigegeben.

In einer ersten bevorzugten Ausgestaltung ist vorgesehen, dass das Verschlusselement drehbar ist. Vorteilhaft kann das Verschlusselement einfach durch ein rotierendes Antriebselement gedreht werden, wobei eine besonders genaue und zuverlässige Verlagerung der in dem Verschlusselement vorhandenen Durchlassöffnung durch Drehung vorgenommen werden kann. Alternativ oder zusätzlich hierzu kann es jedoch auch vorgesehen sein, dass das Verschlusselement linear geführt ist.

Besonders bevorzugt ist die Heizvorrichtung zwischen einer Außenseite des Innenmantels und einer den Behälter umgebenen Isolierung angeordnet. Vorteilhaft ist für die Aufrechterhaltung einer bestimmten Temperatur innerhalb des Behälters keine allzu hohe Heizleistung erforderlich, da die Heizvorrichtung direkt mit dem Innenmantel in Kontakt steht und zudem der Wärmeverlust durch die Isolierung geringgehalten wird. Zweckmäßigerweise ist die Heizvorrichtung als Heizmanschette ausgebildet. Vorteilhaft kann die Heizvorrichtung leicht ausgetauscht werden und tritt nicht in Kontakt mit dem hergestellten Produkt.

Weiter vorzugsweise wurde die Endo-Alpha-Amylase bakteriell, bevorzugt aus Bacillus amyloliquefaciens gewonnen. Weiter vorzugsweise wurde die maltogene Alpha-Amylase aus einem Pilz, bevorzugt aus Aspergillus oryzae gewonnen.

Weitere Vorteile, Weiterbildungen und Eigenschaften der Erfindung ergeben sich aus der nachstehenden Beschreibung mehrerer bevorzugter Ausführungsbeispiele sowie aus den abhängigen Ansprüchen.

Die Erfindung wird nunmehr unter Bezugnahme auf die anliegenden Zeichnungen anhand eines bevorzugten Ausführungsbeispiels der Erfindung näher erläutert.
- Fig. 1: zeigt ein bevorzugtes Ausführungsbeispiel einer Vorrichtung zur Herstellung eines Milchersatzproduktes in einer Seitenansicht.
- Fig. 2: zeigt die Vorrichtung zur Herstellung eines Milchersatzproduktes aus Fig. 1 in einer Querschnittsansicht.
- Fig. 3: zeigt den in Fig. 1 und Fig. 2 gezeigten Deckel der Vorrichtung zur Herstellung eines Milchersatzproduktes in einer Explosionsdarstellung.

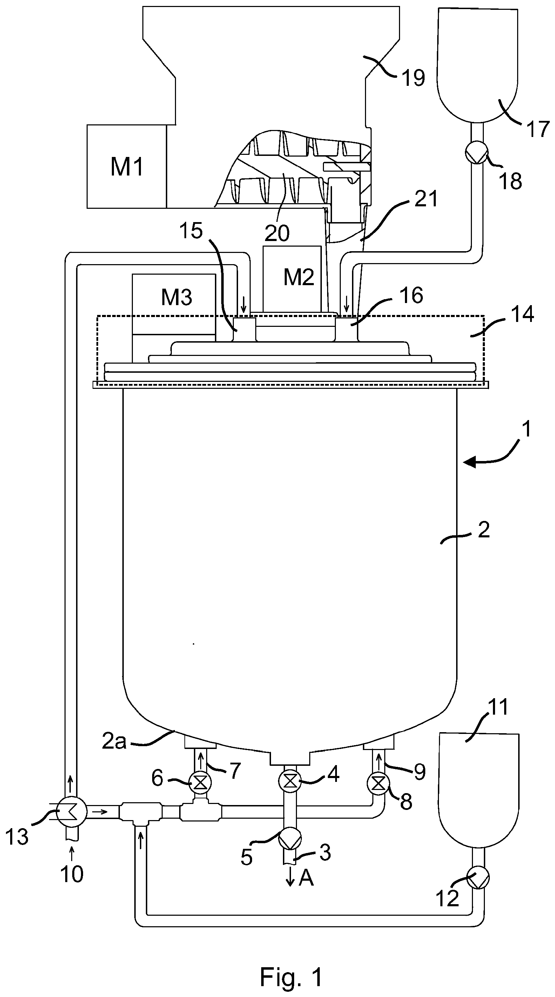

Fig 1 zeigt ein bevorzugtes Ausführungsbeispiel einer Vorrichtung 1 zur Durchführung des erfindungsgemäßen Verfahrens zur Herstellung eines Milchersatzproduktes in einer Seitenansicht. Die Vorrichtung 1 umfasst einen als Batchbehälter ausgebildeten Behälter 2, in welchem alle wesentlichen Reaktionsprozesse zur Herstellung des Milchersatzproduktes ausgeführt werden. Der Behälter 2 weist eine zylinderförmige Form auf, wobei der Boden 2a des Behälters 2 abgerundet ausgebildet ist. Am Boden 2a des Behälters 2 ist ein Auslass 3 angeordnet, durch welchen das verzehrfertige Milchersatzprodukt in Ausflussrichtung A entnehmbar ist.

Zwischen dem Boden 2a des Behälters 2 und dem Auslass 3 sind ein erstes Ventil 4 und eine erste Pumpe 5 angeordnet. Das Ventil 4 in Kombination mit der Pumpe 5 ermöglicht es vorteilhaft, eine genaue Menge des Milchersatzproduktes zu entnehmen.

Neben dem Auslass 3 sind mit dem Boden 2a des Behälters 2 eine über ein zweites Ventil 6 absperrbare erste Zuleitung 7 und eine über ein drittes Ventil 8 absperrbare zweite Zuleitung 9 verbunden. Die erste Zuleitung 7 und die zweite Zuleitung 9 sind zum einen mit einem Wasseranschluss 10 und zum anderen mit einem Reinigungsbehälter 11 verbunden. Das in dem Reinigungsbehälter 11 befindliche Reinigungsmittel kann dabei mittels einer Reinigungspumpe 12 gemeinsam mit dem durch den Wasseranschluss 10 zugeführten Wasser über die Zuleitungen 7, 9 in den Innenraum des Behälters 2 gepumpt werden, sodass der Innenraum regelmäßig von darin befindlichen Resten der darin zubereiteten Milchersatzprodukte gereinigt werden kann. Alternativ kann jedoch auch lediglich das Wasser zur Reinigung verwendet werden. Im Zulauf des Wasseranschlusses 10 ist weiter eine Wärmetauscher 13 vorgesehen, sodass das aus dem Wasseranschluss 10 kommende kalte Wasser dem Innenraum des Behälters 2 vorgewärmt zugeführt werden kann, was eine effizientere und gründliche Reinigung ermöglicht.

Der Behälter 2 ist durch einen in Fig. 1 gestrichelt eingerahmten Deckel 14 verschließbar, wobei die zur Herstellung des Milchersatzproduktes notwendigen Zutaten durch den Deckel 14 hindurch dem Innenraum des Behälters 2 zugeführt werden können. Der Deckel 14 umfasst hierzu an seiner Oberseite einen Einlass 15, welcher mit dem Wasseranschluss 10 verbunden ist. Vorteilhaft ist der Wasseranschluss 10 sowohl für die Reinigung des Innenraumes des Behälters 2 als auch für die Zuführung des für die Herstellung des Milchersatzproduktes notwendigen Wassers nutzbar.

Weiter ist an der Oberseite des Deckels 2 ein weiterer Einlass 16 für eine niederviskose Flüssigkeit, insbesondere Öl vorgesehen. Die niederviskose Flüssigkeit kann vorteilhaft aus einem mit dem Einlass 16 verbundenen Flüssigkeitsbehälter 17 mittels einer Pumpe 18 in den Behälter 2 gepumpt werden. Durch entsprechende Steuerung der Pumpe 18 kann so eine genaue Dosierung der niederviskosen Flüssigkeit vorgenommen werden.

Weiter umfasst die Vorrichtung 1 einen Zutatenmischungsbehälter 19, welcher teilweise aufgeschnitten dargestellt ist. Wie zu erkennen, ist in dem Zutatenmischungsbehälter 19 eine als Förderschnecke ausgebildete Zuführungseinrichtung 20 angeordnet, welche durch einen ersten Antriebsmotor M1 angetrieben wird. Vorteilhaft wird die in dem Zutatenmischungsbehälter 19 vorhandene Zutatenmischung durch Betätigung des ersten Antriebsmotors M1 und der hierdurch gedrehten Förderschnecke 20 in einen Fülltrichter 21 transportiert, wobei der Fülltrichter 21 mit dem Deckel 14 verbunden ist. Darüber hinaus erzeugt der erste Antriebsmotor M1 zusätzlich eine Vibration, welche sich auf den Zutatenmischungsbehälter 19 überträgt, sodass die in dem Zutatenmischungsbehälter befindliche trockene Zutatenmischung zuverlässig nach unten in Richtung der Förderschnecke 20 fallen kann und zudem eine gleichmäßige Verteilung erfolgt.

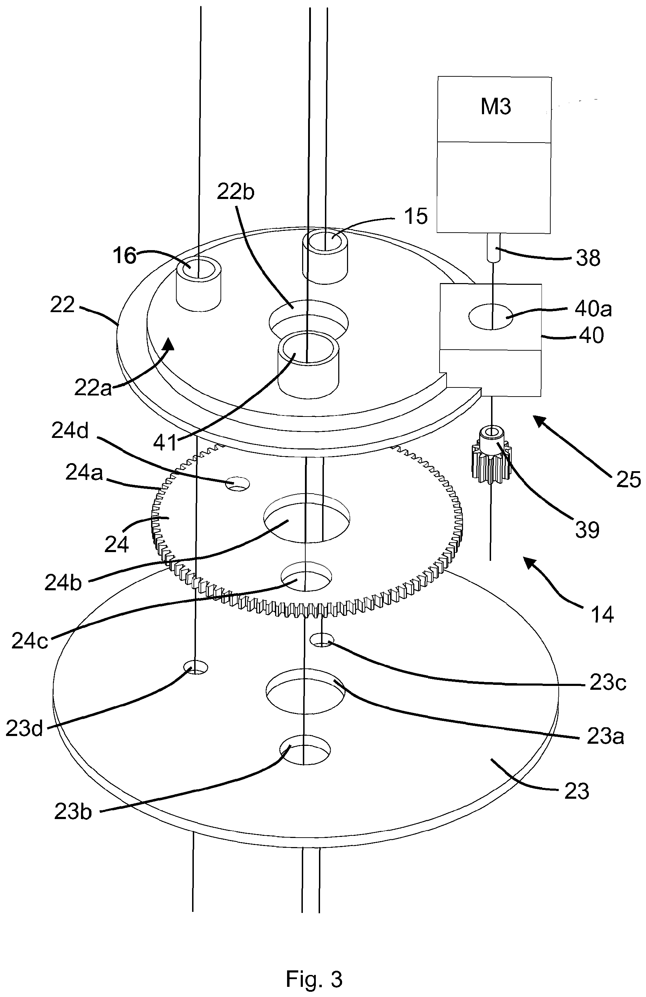

In der Mitte des Deckels 14 ist ein zweiter Antriebsmotor M2 angeordnet, welcher eine in dem Behälter 2 befindliche Rührvorrichtung antreibt. Weiter ist ein dritter Antriebsmotor M3 seitlich von dem zweiten Antriebsmotor M2 auf der Oberseite des Deckels 14 angeordnet, wobei der dritte Antriebsmotor M3 eine in dem Deckel 14 vorgesehene Verschlussvorrichtung antreibt. Die Funktionsweise der hier nicht dargestellten Verschlussvorrichtung wird nachfolgend in Bezug auf die Fig. 3 noch näher erläutert.

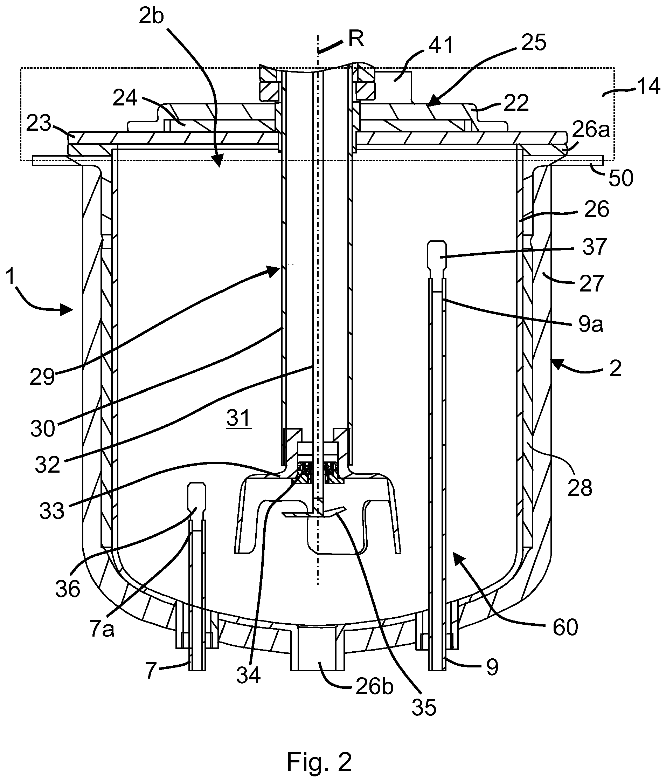

Fig. 2 zeigt die Vorrichtung 1 zur Herstellung eines Milchersatzproduktes aus Fig. 1 in einer Querschnittsansicht. In dieser Ansicht ist zu sehen, dass ein Einlass 41 an der Oberseite des Deckels 14 vorgesehen ist, welcher mit dem Fülltrichter 21 verbunden wird. Weiter ist zu erkennen, dass der Deckel 14 ein oberes Deckelteil 22 umfasst, wobei das obere Deckelteil 22 drehfest mit einem unteren Deckelteil 23 verbunden ist. Zwischen dem oberen Deckelteil 22 und dem unteren Deckelteil 23 ist ein Verschlusselement 24 angeordnet, welches um eine zentrale Rotationsachse R drehbar ist. Das obere Deckelteil 22, das untere Deckelteil 23 und das Verschlusselement 24 bilden gemeinsam einen Teil einer Verschlussvorrichtung 25, welche den Deckel 14 zur Zuführung der Zutatenmischung, des Wassers und der bevorzugt als Öl ausgebildeten niederviskosen Flüssigkeit automatisiert öffnen und schließen kann. Der Aufbau der Verschlussvorrichtung 25 wird weiter unten mit Bezug auf die Fig. 3 näher erläutert.

Weiter ist in Fig. 2 der Aufbau des Behälters 2 zu erkennen. Der Behälter 2 umfasst einen Innenmantel 26 mit einer oberen Öffnung 2b, eine an der Außenseite des Behälters 2 angeordnete Isolierung 27 und eine als Heizmanschette ausgebildete Heizungsvorrichtung 28, welche radial zwischen dem Innenmantel 26 und der Isolierung 27 angeordnet ist. Vorteilhaft ist der Behälter 2 beheizbar ausgebildet. Insbesondere wird durch die Beheizung des Innenmantels 26 vorteilhaft die Möglichkeit eröffnet, die zur Herstellung des Milchersatzproduktes in den Behälter 2 zugeführten Zutaten auf eine vordefinierte Temperatur zu erhitzen und diese vordefinierte Temperatur über einen längeren Zeitraum zu halten.

Der Innenmantel 26 weist oben einen umlaufenden Kragen 26a auf, wobei der umlaufende Kragen 26a zwischen dem unteren Deckelteil 23 und mehreren L-förmigen Haltestücken 50 zur Befestigung des Behälters 2 an einem hier nicht gezeigten Gestell angeordnet ist. In der Mitte der Unterseite des Innenmantels 26 ist eine auslassseitige Öffnung 26b vorgesehen, welche mit dem Auslass 3 aus Fig. 1 verbunden werden kann. Vorteilhaft kann das in dem Behälter 2 direkt hergestellte Milchersatzprodukt unmittelbar aus dem Behälter 2 entnommen werden.

Die Vorrichtung 1 zur Herstellung eines Milchersatzproduktes umfasst weiter eine Rührvorrichtung 29, welche durch den in Fig. 2 gezeigten zweiten Antriebsmotor M2 angetrieben wird. Die Rührvorrichtung 29 umfasst eine hohlzylindrische Hülse 30, welche den Deckel 14 mittig durchsetzt und in den durch den Innenmantel 26 des Behälters 2 begrenzten Hohlraum 31 hineinragt. Die hohlzylindrische Hülse 30 wird durch einen Rührstab 32 durchsetzt, welcher um die Rotationsachse R durch den zweiten Antriebsmotor M2 (siehe Fig. 1) angetrieben drehbar ist. An einem in den Hohlraum 31 hineinragenden unteren Ende der Hülse 30 ist eine Mixglocke 33 angeordnet, welche in die Hülse 30 eingepresst ist. In der Mixglocke 33 ist ein Drehlager 34 angeordnet, welche einen unteren Abschnitt des Rührstabes 32 radial abstützt und weiter vorteilhaft Vibrationen des Rührstabes 32 minimiert. In einem unteren Ende des Rührstabes 32 ist ein Rührelement 35 angeordnet, welches radial von dem Rührstab 32 abstehende Klingen umfasst.

Weiter ist zu erkennen, dass die erste Zuleitung 7 in den Hohlraum 31 hineingeführt ist und an einem in den Hohlraum 31 hineinragenden ersten Ende 7a der ersten Zuleitung 7 eine erste Reinigungsdüse 36 einer Reinigungsvorrichtung 60 befestigt ist. Analog hierzu ist die zweite Zuleitung 9 ebenso in den Hohlraum 31 hineingeführt und es ist an einem in den Hohlraum 31 hineinragenden ersten Ende 9a der zweiten Zuleitung 9 eine zweite Reinigungsdüse 37 befestigt. Die erste Reinigungsdüse 36 ist dabei in einer ersten Höhe und die zweite Reinigungsdüse 37 in einer zweiten Höhe angeordnet, wobei die zweite Höhe größer als die erste Höhe ist, sodass der Innenmantel 26 und die Rührvorrichtung 29 über ihre gesamte Erstreckung durch die Reinigungsdüsen 36, 37 erreichbar sind. Vorteilhaft wird durch die Reinigungsdüsen 36, 37 erreicht, dass das durch die erste Zuleitung 7 und die zweite Zuleitung 9 jeweils zugeführte Wasser oder die Mischung aus Wasser und Reinigungsmittel mit erhöhtem Druck in den Hohlraum 31 eingespritzt wird und so eine vollautomatische Reinigung realisiert wird.

Fig. 3 zeigt den in Fig. 1 und Fig. 2 gezeigten Deckel 14 der Vorrichtung zur Herstellung eines Milchersatzproduktes in einer Explosionsdarstellung. In dieser Darstellung ist insbesondere der Aufbau der in den Deckel 14 integrierten Verschlussvorrichtung 25 zu sehen. Die Verschlussvorrichtung 25 umfasst einen Antriebsmotor M3, wobei der Antriebsmotor M3 eine Ausgangswelle 38 aufweist, welche drehfest mit einem Ritzel 39 gekoppelt ist. Zur Fixierung des Antriebsmotors M3 und des mit der Ausgangswelle 38 gekoppelten Ritzels 39 mit dem oberen Deckelteil 22 des Deckels 14, weist der Deckel 14 ein Antriebsgehäuse 40 auf. Das Antriebsgehäuse 40 weist eine Öffnung 40a auf, durch welche die Ausgangswelle 38 geführt ist.

Das Ritzel 39 ist mit dem zwischen dem oberen Deckelteil 22 und dem unteren Deckelteil 23 angeordneten Verschlusselement 24 in Getriebeeingriff. Das Verschlusselement 24 weist hierzu an ihrem Außenumfang eine Außenverzahnung 24a auf, welche mit dem Ritzel 39 kämmt. Vorteilhaft wird hierdurch sichergestellt, dass das Verschlusselement 24 zuverlässig und genau gedreht werden kann. Das obere Deckelteil 22 weist an seiner Oberseite 22a den Einlass 15 für das Wasser, den Einlass 16 für die niederviskose Flüssigkeit und weiter einen Einlass 41 für die trockene Zutatenmischung auf, wobei der Einlass 41 mit dem Fülltrichter 21 gekoppelt werden kann. Darüber hinaus weist das obere Deckelteil 22 eine zentrale Bohrung 22b auf, durch welche hindurch die Hülse 30 der Rührvorrichtung 29 (siehe Fig. 2) geführt werden kann.

Das Verschlusselement 24 weist analog zum oberen Deckelteil 22 eine zentrale Bohrung 24b auf, welche im montierten Zustand durch die Hülse 30 der Rührvorrichtung 29 durchsetzt wird. Die zentrale Bohrung 22b des oberen Deckelteils 22 und die zentrale Bohrung 24b des Verschlusselementes 24 weisen dabei denselben Durchmesser auf und liegen im zusammengesetzten Zustand des Deckels 14 deckungsgleich aufeinander. Weiter weist das Verschlusselement 24 eine radial zwischen der zentralen Bohrung 24b und der Außenverzahnung 24a angeordnete erste Durchlassöffnung 24c und eine zweite Durchlassöffnung 24d auf, wobei die erste Durchlassöffnung 24c dem Einlass 41 für die Zutatenmischung zugeordnet ist und etwa denselben Innendurchmesser wie dieser aufweist.

In der in Fig. 3 gezeigten Darstellung ist zu sehen, dass die erste Durchlassöffnung 24c deckungsgleich mit dem Einlass 41 für die trockene Zutatenmischung angeordnet ist. Demgegenüber ist die zweite Durchlassöffnung 24d zwischen dem Einlass 15 für das Wasser und dem Einlass 16 für die niederviskose Flüssigkeit angeordnet. Vorteilhaft kann durch Drehung des Verschlusselementes 24 um die zentrale Rotationsachse R ein sequenzielles Öffnen und Verschließen der einzelnen Einlassöffnungen 15, 16, 41 vorgenommen werden, sodass eine gesteuerte Dosierung der einzelnen Bestandteile des herzustellenden Milchersatzproduktes vorgenommen werden kann.

Das untere Deckelteil 23 ist als Lochscheibe ausgebildet und weist neben einer zentralen Bohrung 23a eine erste Durchlassöffnung 23b, eine zweite Durchlassöffnung 23c und eine dritte Durchlassöffnung 23d auf. Die zentrale Bohrung 23a weist einen etwas kleineren Innendurchmesser als die zentrale Bohrung 24a des Verschlusselementes 24 bzw. als die zentrale Bohrung 22a des oberen Deckelteils 22 auf. Die erste Durchlassöffnung 23b ist deckungsgleich unter dem Einlass 41 für die Zutatenmischung angeordnet. Analog hierzu ist die zweite Durchlassöffnung 23c deckungsgleich unter dem Einlass 15 für das Wasser und die dritte Durchlassöffnung 23d deckungsgleich Einlass 16 für die niederviskose Flüssigkeit angeordnet. Vorteilhaft wird ein Durchgang für die jeweiligen Zutaten durch Drehung des Verschlusselementes 24 geöffnet oder geschlossen.

Nachfolgend werden mehrere bevorzugte Ausführungsbeispiele von erfindungsgemäßen Verfahren zur Herstellung eines Milchersatzproduktes beschrieben, insbesondere unter Verwendung der beschriebenen Vorrichtung 1 zur Herstellung eines Milchersatzproduktes. Alle nachfolgenden Ausführungsbeispiele beziehen sich dabei auf die Herstellung von Hafermilch. Die nachfolgend beschriebenen Ausführungsbeispiele eines Verfahrens zur Herstellung von Hafermilch zeichnen sich allgemein dadurch aus, dass diese eine Hafersuspension mit niedriger Viskosität und erhöhtem Zuckergehalt unter Verwendung der oben beschriebenen Vorrichtung erzeugen, wobei das Verfahren besonders energie- und zeitsparend ausgebildet ist.

Das typische Verfahren zur Herstellung von Hafermilch umfasst die drei grundlegenden Verfahrensschritte, welche zur Herstellung von Hafermilch erforderlich sind: In einem ersten Schritt erfolgt die Gelatinierung, bei der die in dem Hafer enthaltene Stärke für die Enzyme durch Übergang in eine wässrige Phase zugänglich gemacht werden. Bei diesem Verfahrensschritt findet ein Quellen des Stärkeraums durch Erhitzen über die Gelatinierungstemperatur, ein Einlagern von Wasser in die Doppelhelix-Struktur des Amylopektins und die Auslagerung der Amylosemoleküle in die wässrige Phase statt. In einem zweiten Verfahrensschritt erfolgt die Verflüssigung der Stärke-Lösung durch Abbau der Verzweigungen, durch z. B. Pullulanasen, welche die verzweigten Amylopektin-Moleküle zerschneiden, sodass Amylase-Ketten übrigbleiben. In einem dritten Verfahrensschritt erfolgt die Verzuckerung, d.h. das Spalten von Stärke-Ketten bis hin zu kurzkettigen Zucker-Molekülen, wie z. B. Maltose in Milch-typischer Menge (z. B. 3.5-6.0g/100g). Es wird typischerweise in die maltogene Verzuckerung bis zur Maltose, bzw. die Glucoamylasen-Verzuckerung bis hin zur Glucose unterschieden.

Bei dem erfindungsgemäßen Verfahren werden die oben genannten drei Verfahrensschritte in einem einzigen Verfahrensschritt gleichzeitig bei einer geringen Temperatur ausgeführt, wobei dies vorteilhaft zu einer deutlichen Verkürzung der Herstellungszeit und gleichzeitig zur Absenkung des Energiebedarfs führt. Insbesondere sind keine hohen Heizleistungen erforderlich, sodass das Verfahren auch mittels eines einfachen Haushaltsstromanschlusses auf kleiner Fläche durchführbar ist.

Zur Optimierung des Verfahrens zur Herstellung von Hafermilch wurden verschiedene Versuche durchgeführt, bei denen der Einfluss der Reaktionsdauer, der Enzymkonzentration, der Temperatur und der Auswahl eines Co-Faktors untersucht wurde.

In einem ersten Versuch wurde ein Zutatengemisch aus einer hitzestabilen, bakteriellen Endo-alpha-Amylase (EC 3.2.1.1) (E1), hier BAN ^{®} von der Firma Novozymes ^{®} und einer hitzeinstabilen, aus Pilzen gewonnenen maltogenen Alpha-Amylase (EC 3.2.1.1) (E2), hier Fungamyl ^{®} von der Firma Novozymes ^{®}, Kochsalz (NaCl), CaCl₂ als hitzestabilisierendem Co-Faktor und Hafermehl, welches aus dem vollen, entspelzten Korn trockengemahlen und nicht vorbehandelt, insbesondere nicht vor-gelatiniert ist, in 60 °C temperiertes Wasser hineingegeben. Die hierdurch erhaltende Suspension wird kontinuierlich über eine Dauer von 90 Minuten gerührt. Die Zusammensetzung des Zutatengemisches und die weiteren Versuchsbedingungen sind in der Tab. 1 zusammengefasst:

**Tab. 1: Versuchsbedingungen 1. Versuch**

| | |
|---|---|
| Gewicht NaCl [g] | 0.50 |
| Gewicht CaCl₂ [g] | 1.50 |
| Gesamte Rührdauer [min] | 90 |
| Temperatur [°C] | 60 |
| Gewicht Endo-alpha-Amylase [g] | 0.80 |
| Gewicht maltogene Alpha-Amylase [g] | 0.60 |
| Gewichtsverhältnis Hafermehl:Wasser [w:w] | 1:9 |
| Gewicht Hafermehl [g] | 100 |

Bei diesem ersten Versuch wurden nach 40 Minuten und jeweils nachfolgend im Abstand von 10 Minuten Proben der Hafersuspension entnommen, auf 4 °C gekühlt und auf ihren Zuckergehalt mittels Hochleistungsflüssigkeits-chromatographie (HPLC) untersucht. Das Ergebnis ist in der nachfolgend gezeigten Tab. 2 aufgeführt:

**Tab. 2: Messergebnisse HPLC, 1. Versuch**

| **Zeitpunkt Probennahme [min]** | **Fructose (%)** | **Glucose (%)** | **Saccharose (%)** | **Maltose (%)** | **Gesamtzucker (%)** |
|---|---|---|---|---|---|
| 40 | 0 | 0.5 | 0.1 | 3.7 | 4.3 |
| 50 | 0 | 0.6 | 0.1 | 3.8 | 4.5 |
| 60 | 0 | 0.6 | 0.1 | 3.9 | 4.6 |
| 70 | 0 | 0.6 | 0.1 | 3.9 | 4.6 |
| 80 | 0 | 0.6 | 0.1 | 3.9 | 4.6 |
| 90 | 0 | 0.6 | 0.1 | 4 | 4.7 |

Bei diesem Versuch ist in Bezug auf die Fermentationsdauer zu sehen, dass nur ein relativ geringer Anstieg des Gesamtzuckeranteils um 0,4 Prozentpunkte nach 90 Minuten gegenüber 40 Minuten vorliegt. Hieraus ist zu erkennen, dass bereits nach 40 Minuten zu 85 % und nach 50 Minuten zu 100 % ein für Hafermilch getränketypischer Zielzuckergehalt von 4,5 % erreicht wird.

Bei einem zweiten Versuch zur Untersuchung des Einflusses des Enzymkonzentration wurden nachfolgend in der Tab. 3 zusammengefasste Versuchsbedingungen verwendet:

**Tab. 3: Versuchsbedingungen 2. Versuch**

| | |
|---|---|
| Gewicht NaCl [g] | 0.25 |
| Gewicht CaCl₂ [g] | 0.75 |
| Gesamte Rührdauer [min] | 90 |
| Temperatur [°C] | 60 |
| Gewicht Endo-alpha-Amylase [g] | 0.40 |
| Gewicht maltogene Alpha-Amylase [g] | 0.30 |
| Gewichtsverhältnis Hafermehl:Wasser [w:w] | 1:9 |
| Gewicht Hafermehl [g] | 100 |

Im Vergleich zu den Versuchsbedingungen des ersten Versuchs (vgl. Tab 1) wurde die Menge der dem Hafermehl zugemischtem Kochsalz NaCl, des Co-Faktors CaCl₂ und die Menge der beiden Enzyme halbiert, wobei die weiteren Versuchsparameter beibehalten wurden.

Analog zu dem ersten Versuch wurden bei diesem zweiten Versuch nach 40 Minuten und jeweils nachfolgend im Abstand von 10 Minuten Proben der Hafersuspension entnommen, auf 4 °C gekühlt und auf ihren Zuckergehalt mittels Hochleistungsflüssigkeits-chromatographie (HPLC) untersucht. Das Ergebnis ist in der nachfolgend gezeigten Tab. 4 aufgeführt:

**Tab. 4: Messergebnisse HPLC, 2. Versuch**

| **Zeitpunkt Probennahme [min]** | **Fructose (%)** | **Glucose (%)** | **Saccharose (%)** | **Maltose (%)** | **Gesamtzucker (%)** |
|---|---|---|---|---|---|
| 40 | 0.0 | 0.3 | 0.2 | 3.7 | 4.2 |
| 50 | 0.0 | 0.4 | 0.1 | 3.5 | 4.0 |
| 60 | 0.0 | 0.4 | 0.1 | 3.5 | 4.0 |
| 70 | 0.0 | 0.4 | 0.1 | 3.7 | 4.2 |
| 80 | 0.0 | 0.4 | 0.1 | 3.7 | 4.2 |
| 90 | 0.0 | 0.4 | 0.1 | 3.7 | 4.2 |

Im Ergebnis wird durch die Verdopplung der Enzymmenge ein zwischen 6 % und 13 % bzw. 0, 3 bis 0, 5 Prozentpunkte höherer Gesamtzuckeranteil erreicht.

Bei einer dritten zweiteiligen Versuchsreihe zur Ermittlung der Temperaturabhängigkeit wurden nachfolgend in den Tab. 5 und 6 zusammengefasste Versuchsbedingungen verwendet.

**Tab. 5: Versuchsbedingungen 3. Versuchsreihe, 1. Teil**

| | |
|---|---|
| Gewicht NaCl [g] | 1.00 |
| Gewicht CaCl₂ [g] | 0.00 |
| Gesamte Rührdauer [min] | 70 |
| Temperatur [°C] | 60 |
| Gewicht Endo-alpha-Amylase [g] | 0.40 |
| Gewicht maltogene Alpha-Amylase [g] | 0.30 |
| Gewichtsverhältnis Hafermehl:Wasser [w:w] | 1:9 |
| Gewicht Hafermehl [g] | 100 |

**Tab. 6: Versuchsbedingungen 3. Versuchsreihe, 2. Teil**

| | |
|---|---|
| Gewicht NaCl [g] | 1.00 |
| Gewicht CaCl₂ [g] | 0.00 |
| Gesamte Rührdauer [min] | 70 |
| Temperatur [°C] | 70 |
| Gewicht Endo-alpha-Amylase [g] | 0.40 |
| Gewicht maltogene Alpha-Amylase [g] | 0.30 |
| Gewichtsverhältnis Hafermehl:Wasser [w:w] | 1:9 |
| Gewicht Hafermehl [g] | 100 |

Bei der dritten Versuchsreihe wurde kein Co-Faktor, sondern lediglich NaCl und die beiden Enzyme dem Hafermehl zugefügt. Darüber hinaus wurden bei beiden Versuchsteilen die Verarbeitungsdauer auf maximal 70 Minuten begrenzt. Der Unterschied zwischen den beiden Versuchsteilen besteht ansonsten lediglich in der verwendeten Temperatur der Suspension, welche in dem ersten Versuchsteil (Tab. 5) 60 °C und bei dem zweiten Versuchsteil (Tab. 6) 70 °C beträgt.

Auch hier wurde nach 40 Minuten und jeweils nachfolgend im Abstand von 10 Minuten Proben der Hafersuspension entnommen, auf 4 °C gekühlt und auf ihren Zuckergehalt mittels Hochleistungs-Flüssigkeits-Chromatographie (HPLC) untersucht. Für die in Tab. 5 gezeigten Versuchsbedingungen bei 60 °C ergaben sich folgende Messwerte der Zuckeranteile:

**Tab. 7: Messergebnisse HPLC, 3. Versuchsreihe, 1. Teil**

| **Zeitpunkt Probennahme [min]** | **Fructose (%)** | **Glucose (%)** | **Saccharose (%)** | **Maltose (%)** | **Gesamtzucker (%)** |
|---|---|---|---|---|---|
| 40 | - | 0.26 | - | 2.91 | 3.17 |
| 50 | - | 0.27 | - | 2.90 | 3.17 |
| 60 | - | 0.28 | - | 2.82 | 3.10 |
| 70 | - | 0.26 | - | 2.81 | 3.07 |

Bei Anhebung der Temperatur der Suspension auf 70 °C ergaben sich im Vergleich folgende Messwerte der Zuckeranteile:

**Tab. 8: Messergebnisse HPLC, 3. Versuchsreihe, 2. Teil**

| **Zeitpunkt Probennahme [min]** | **Fructose (%)** | **Glucose (%)** | **Saccharose (%)** | **Maltose (%)** | **Gesamtzucker (%)** |
|---|---|---|---|---|---|
| 40 | - | 0.13 | 0.10 | 1.68 | 1.91 |
| 50 | - | 0.00 | 0.10 | 1.61 | 1.71 |
| 60 | - | 0.13 | 0.11 | 1.63 | 1.87 |
| 70 | - | 0.14 | 0.12 | 1.67 | 1.93 |

Es ist zu erkennen, dass durch die Absenkung der Temperatur von 70 °C auf 60 °C eine Erhöhung des Gesamtzuckeranteils 60 % bzw. 1,2 Prozentpunkte erzielt werden kann. Dies ist inbesondere auf die Inaktivierung der maltogenen Alpha-Amylase bei Temperaturen oberhalb von 60°C zurückzuführen.

In einer vierten zweiteiligen Versuchsreihe wurde die Abhängigkeit des Herstellungsprozesses einer Hafersuspension von dem Anteil des Co-Faktors CaCl₂ untersucht. Hierzu wurden nachfolgend in den Tab. 9 und 10 zusammengefasste Versuchsbedingungen verwendet:

**Tab. 9: Versuchsbedingungen 4. Versuchsreihe, 1. Teil**

| | |
|---|---|
| Gewicht NaCl [g] | 0,25 |
| Gewicht CaCl₂ [g] | 0.75 |
| Gesamte Rührdauer [min] | 70 |
| Temperatur [°C] | 70 |
| Gewicht Endo-alpha-Amylase [g] | 0.40 |
| Gewicht maltogene Alpha-Amylase [g] | 0.30 |
| Gewichtsverhältnis Hafermehl:Wasser [w:w] | 1:9 |
| Gewicht Hafermehl [g] | 100 |

**Tab. 10: Versuchsbedingungen 4. Versuchsreihe, 2. Teil**

| | |
|---|---|
| Gewicht NaCl [g] | 0,5 |
| Gewicht CaCl₂ [g] | 0.5 |
| Gesamte Rührdauer [min] | 90 |
| Temperatur [°C] | 60 |
| Gewicht Endo-alpha-Amylase [g] | 0.40 |
| Gewicht maltogene Alpha-Amylase [g] | 0.30 |
| Gewichtsverhältnis Hafermehl:Wasser [w:w] | 1:9 |
| Gewicht Hafermehl [g] | 100 |

Die zugehörigen HPLC-Messergebnisse für die Zuckeranteile in der Hafersuspension sind in den Tabellen 11 und 12 dargestellt.

**Tab. 11: Messergebnisse HPLC, 4. Versuchsreihe, 1. Teil**

| **Zeitpunkt Probennahme [min]** | **Fructose (%)** | **Glucose (%)** | **Saccharose (%)** | **Maltose (%)** | **Gesamtzucker (%)** |
|---|---|---|---|---|---|
| 40 | 0.0 | 0.19 | 0.15 | 2.40 | 2.74 |
| 50 | 0.0 | 0.20 | 0.11 | 2.29 | 2.60 |
| 60 | 0.0 | 0.22 | 0.10 | 2.33 | 2.65 |
| 70 | 0.0 | 0.18 | 0.11 | 2.28 | 2.57 |

**Tab. 12: Messergebnisse HPLC, 4. Versuchsreihe, 2. Teil**

| **Zeitpunkt Probennahme [min]** | **Fructose (%)** | **Glucose (%)** | **Saccharose (%)** | **Maltose (%)** | **Gesamtzucker (%)** |
|---|---|---|---|---|---|
| 40 | 0.0 | 0.4 | 0.1 | 3.6 | 4.1 |
| 50 | 0.0 | 0.4 | 0.1 | 3.5 | 4.0 |
| 60 | 0.0 | 0.4 | 0.1 | 3.6 | 4.1 |
| 70 | 0.0 | 0.4 | 0.1 | 3.7 | 4.2 |
| 80 | 0.0 | 0.4 | 0.1 | 3.7 | 4.2 |
| 90 | 0.0 | 0.5 | 0.1 | 3.8 | 4.4 |

Bei Vergleich des ersten Versuchsteils der dritten Versuchsreihe (Tab. 7) ohne Co-Faktor und des zweiten Versuchs mit Co-Faktor CaCl₂ (Tab. 4) wird bei 60 °C eine um 17 bis 25 % höhere Verzuckerung bzw. ein um 0,7 bis 1,0 Prozentpunkte höherer Gesamtzuckeranteil erzielt. Bei 70 °C wird bei Vergleich der Messergebnisse für den zweiten Versuchsteil der dritten Versuchsreihe (Tab. 8) mit dem ersten Versuchsteil der vierten Versuchsreihe (Tab. 11) ein um 28 bis 32 % höherer Gesamtzuckeranteil erzielt. Vergleich man den zweiten Versuch (Tab. 4) mit der zweiten Versuchsteil der vierten Versuchsreihe (Tab 12), so erkennt man, dass der Co-Faktor CaCl₂ bereits bei einem Massenverhältnis von 1.66:1 (w/w) bezogen auf die maltogene Alpha-Amylase hitzestabilisierend wirkt.

Weiter wurde ein Versuch unter Verwendung der vorstehend beschriebenen Vorrichtung zur Herstellung eines Milchersatzproduktes durchgeführt. Die Versuchsbedingungen sind nachfolgend in der Tab. 13 dargestellt:

**Tab. 13: Versuchsbedingungen Versuch mit Vorrichtung 1**

| | |
|---|---|
| Gewicht NaCl [g] | 1.11 |
| Gewicht CaCl₂ [g] | 3.33 |
| Gesamte Rührdauer [min] | 60 |
| Temperatur [°C] | 60 |
| Gewicht Endo-alpha-Amylase [g] | 1.78 |
| Gewicht maltogene Alpha-Amylase [g] | 1.33 |
| Gewichtsverhältnis Hafermehl:Wasser [w:w] | 1:9 |
| Gewicht Hafermehl [g] | 444 |

Diese Versuchsbedingungen entsprechen den in der Praxis bevorzugt gewünschten Parametern für ein erfindungsgemäßes Verfahren zur Herstellung von Hafermilch. Die zugehörigen HPLC-Messergebnisse für die Zuckeranteile in der Hafersuspension bei Entnahme nach 60 Minuten sind nachfolgend in der Tab. 14 dargestellt:

**Tab. 14: Messergebnisse HPLC, Versuch mit Vorrichtung 1**

| **Zeitpunkt Probennahme [min]** | **Fructose (%)** | **Glucose (%)** | **Saccharose (%)** | **Maltose (%)** | **Gesamtzucker (%)** |
|---|---|---|---|---|---|
| 60 | 0.0 | 0.40 | 0.1 | 3.7 | 4.20 |

Im Ergebnis wird der Zielwert für den Gesamtzuckeranteil von 4,5 % annähernd erreicht und das Verhältnis Maltose zu Glukose von etwa 9 liegt im gewünschten Bereich.

Zusammenfassend folgt aus den vorstehend beschriebenen Versuchen, das die Herstellung von Hafermilch durch Kombination eines Co-Faktors und zweier Alpha-Amylasen bei einer maximalen Temperatur von 60° mit einer hohen Aktivität und Stabilität der Enzyme gelingt. Vorteilhaft kann Hafermilch so in einem besonders einfachen Herstellungsverfahren produziert werden, welches im Wesentlichen lediglich das Hinzufügen der richtigen Zutatenmischung zu Wasser mit einer Temperatur von maximal 60°C und kontinuierlichen Rühren für einen maximalen Zeitraum von 60 Minuten umfasst, jedoch die drei zur Herstellung von Getreidesuspensionen notwendigen, bisher sequentiell/kaskadiert durchgeführten Prozessschritte, Gelatinierung, Verflüssigung und Verzuckerung, kombiniert bzw. gleichzeitig ablaufen. Besonders vorteilhaft erfordert die Herstellung der Hafermilch lediglich einen Behälter mit Rührvorrichtung und einer Heizmöglichkeit des Behälters zur Aufrechterhaltung der Temperatur der Hafersuspension, wobei der Energieverbrauch aufgrund der relativ niedrigen Temperatur von 60° ebenfalls relativ gering ist.

## Patentansprüche

1. Verfahren zur Herstellung eines als Hafermilch ausgebildeten Milchersatzproduktes, umfassend
Bereitstellen einer trockenen Zutatenmischung, umfassend zumindest eine als trocken gemahlenes Hafermehl ausgebildete pflanzliche Hauptzutat, ein erstes Enzym, wobei das erste Enzym als hitzestabile Endo-Alpha-Amylase ausgebildet ist und die Menge des ersten Enzyms zwischen 0,2 und 0,6 Gewichtsprozent bezogen auf den trockenen Haferanteil liegt, ein zweites Enzym, wobei das zweite Enzym als hitzeinstabile maltogene Alpha-Amylase ausgebildet ist und die Menge des zweiten Enzyms zwischen 0,15 und 0,45 Gewichtsprozent bezogen auf den trockenen Haferanteil liegt, und einen Co-Faktor zur Hitzestabilisierung eines der Enzyme, wobei der hitzestabilisierende Co-Faktor als CaCl₂ ausgebildet ist und das Gewichtverhältnis von CaCl₂ zu dem einen Enzym, welches durch den Co-Faktor hitzestabilisiert wird, zwischen 1:1 bis 2,5:1 liegt,
Bereitstellen von Wasser mit einer maximalen Temperatur von 60 °C,
Hinzufügen der trockenen Zutatenmischung in das Wasser unter Rühren zum Erhalt einer Suspension, wobei das Gewichtsverhältnis des Hafermehls zu Wasser zwischen 1:4 und 1:10, bevorzugt zwischen 1:7 und 1:9 liegt, und
Entnahme des Milchersatzproduktes innerhalb eines Zeitraums von 40 bis 60 Minuten nach dem Hinzufügen der trockenen Zutatenmischung.

## Claims

1. A method for producing a milk substitute product in the form of oat milk, comprising
providing a dry ingredient mixture comprising at least one main plant ingredient in the form of dry ground oat flour, a first enzyme, wherein the first enzyme is in the form of heat-stable endo-alpha-amylase and the amount of the first enzyme is between 0.2 and 0.6 percent by weight based on the dry oat content, a second enzyme, wherein the second enzyme is a heat-unstable maltogenic alpha-amylase and the amount of the second enzyme is between 0.15 and 0.45 percent by weight based on the dry oat content, and a cofactor for heat stabilization of one of the enzymes, wherein the heat-stabilizing cofactor is CaCl₂ and the weight ratio of CaCl₂ to the one enzyme which is heat-stabilized by the cofactor is between 1:1 and 2.5:1,
providing water with a maximum temperature of 60 °C.
adding the dry ingredient mixture to the water while stirring to obtain a suspension, wherein the weight ratio of oat flour to water is between 1:4 and 1:10, preferably between 1:7 and 1:9, and
removing the milk substitute product within a period of 40 to 60 minutes after adding the dry ingredient mixture.

## Revendications

1. Procédé de fabrication d'un produit de substitution du lait sous forme de lait d'avoine, comprenant
Fourniture d'un mélange d'ingrédients secs comprenant au moins un ingrédient végétal principal sous forme de farine d'avoine moulue à sec, une première enzyme, la première enzyme étant sous forme d'endo-alpha-amylase thermostable et la quantité de la première enzyme étant comprise entre 0,2 et 0,6 % en poids par rapport à la teneur en avoine sèche, une deuxième enzyme, la deuxième enzyme étant une alpha-amylase maltogène thermostable et la quantité de la deuxième enzyme étant comprise entre 0,15 et 0,45 % en poids par rapport à la teneur en avoine sèche, et un cofacteur pour la stabilisation thermique de l'une des enzymes, le cofacteur thermostabilisateur étant sous forme de CaCl₂ et le rapport pondéral entre le CaCl₂ et l'une des enzymes qui est stabilisée à la chaleur par le cofacteur est compris entre 1:1 et 2,5:1,
Fourniture d'eau à une température maximale de 60 °C,
Ajout du mélange d'ingrédients secs à l'eau tout en remuant pour obtenir une suspension, le rapport pondéral entre la farine d'avoine et l'eau étant compris entre 1:4 et 1:10, de préférence entre 1:7 et 1:9, et
Retrait du produit de substitution du lait dans un délai de 40 à 60 minutes après l'ajout du mélange d'ingrédients secs.
